# EUROPÄISCHE PATENTSCHRIFT

(11) **EP 4 075 220 B1**
(45) Veröffentlichungstag und Bekanntmachung des Hinweises auf die Patenterteilung: **25.09.2024**
(21) Anmeldenummer: 22168242.0
(22) Anmeldetag: 13.04.2022
(51) Int. Cl.: G05B 19/418

(54) **VORRICHTUNG UND VERFAHREN ZUR IDENTIFIZIERUNG VON VERÄNDERUNGEN AN EINER MASCHINENANORDNUNG**
DEVICE AND METHOD FOR IDENTIFYING CHANGES IN A MACHINE ARRANGEMENT
DISPOSITIF ET PROCÉDÉ D'IDENTIFICATION DES MODIFICATIONS APPORTÉES À UN AGENCEMENT DE MACHINE

(30) Priorität: 14.04.2021 DE 102021109399
(43) Veröffentlichungstag der Anmeldung: 19.10.2022
(73) Patentinhaber: Pilz GmbH & Co. KG, 73760 Ostfildern (DE)
(72) Erfinder: Neuschwander, Bernd, 73760 Ostfildern (DE); Stark, Klaus, 73760 Ostfildern (DE)
(74) Vertreter: Witte, Weller & Partner Patentanwälte mbB

(56) Entgegenhaltungen:
- EP-A1- 3 731 043
- DE-A1- 102020 206 132
- US-A1- 2010 076 575
- US-A1- 2011 264 416

## Beschreibung

Die vorliegende Erfindung betrifft eine Vorrichtung zur Identifizierung von Veränderungen an einer Maschinenanordnung sowie ein dazugehöriges Verfahren.

Der Fokus der industriellen Weiterentwicklung liegt gegenwärtig darauf, den Produktionsprozess flexibler zu gestalten, um diesen an den jeweiligen Kundenbedarf anzupassen. Hierfür vollzieht sich ein Wandel von statischen Produktionslinien hin zu rekonfigurierbaren, modularen Produktionseinheiten, die je nach Anforderung umgestaltet werden können.

Rekonfigurierbare Produktionslinien setzen voraus, dass auch die beteiligten Maschinen und Anlagen gleichermaßen wandlungsfähig sind und sich entsprechend verändern und anpassen lassen. Diese Flexibilität stellt jedoch die Sicherheitstechnik vor neue Herausforderungen, da mit jeder Änderung einer Maschine neu beurteilt werden muss, ob sich ein von der Maschine ausgehendes Risiko verändert hat und dieses ggf. eine Neuausrichtung der sicherheitstechnischen Einrichtung erforderlich macht. In Europa beispielsweise ist dieses Erfordernis normativ durch die Maschinenrichtlinie (CE) festgelegt, die eine regelmäßige Gefährdungsbeurteilung für die komplette Lebensdauer einer Maschine vorschreibt.

Um dennoch die Vorteile flexibler und wandlungsfähiger Maschinenanordnungen nutzen zu können, ist man versucht, den Prozess der Risikobeurteilung selbst zu automatisieren bzw. einen Sicherheitsingenieur bei der Risikobeurteilung durch den Computer zu assistieren. Die Grundlagen der automatischen oder assistierten Risikobeurteilung bilden hierbei virtuelle Modelle der Maschine sowie virtuelle Modelle der jeweils eingesetzten Sicherheitstechnik. Anhand der Modelle können Änderungen simuliert und die sicherheitstechnischen Vorkehrungen getestet und überprüft werden, bevor die Anlage tatsächlich verändert wird. Die automatische oder assistierte Risikobeurteilung, im Folgenden kurz als automatisierte Risikobeurteilung bezeichnet, kann dem Sicherheitsingenieur entsprechende Empfehlungen aufzeigen und bei der normgerechten Risikominimierung assistieren. Eine regelmäßige Gefährdungsbeurteilung kann so strukturiert, schnell und zumindest teilautomatisiert durchgeführt werden, insbesondere wenn die automatische Risikobeurteilung auf reale Laufzeitdaten zurückgreifen kann. Beispielhaft ist ein solches Konzept in EP 3 702 855 A1 sowie in EP 3 731 043 A1 gezeigt.

Der Umfang der vorgenannten automatisierten Risikobeurteilung ist grundsätzlich auf den jeweiligen Umfang der verwendeten Modelle oder Simulationen beschränkt, selbst wenn diese auf Laufzeitdaten der jeweiligen Maschine zurückgreifen können. Hierbei können jedoch wesentliche Änderungen an der Maschine unberücksichtigt bleiben, wenn relevante Faktoren zu deren Beurteilung von den Modellen oder Simulationen nicht umfasst sind oder sich nicht von diesen abbilden lassen. Wesentliche Änderungen an einer Maschine können sich aber gerade aus Änderungen der Umgebung oder einer Kombination aus maschinenabhängigen und maschinenunabhängigen Faktoren ergeben. Diese müssten zunächst modelliert werden, um bei einer automatisierten Risikobeurteilung berücksichtigt zu werden. Zudem ist der Begriff "wesentliche Änderung" regelmäßig normativ festgelegt und beinhaltet daher auch Aspekte, die über eine technische Ausgestaltung der Maschine hinausgehen können.

Vor diesem Hintergrund ist es eine Aufgabe, eine Vorrichtung und ein Verfahren anzugeben, welche eine automatisierte Risikobeurteilung vorteilhaft ergänzen. Insbesondere ist es eine Aufgabe, eine Vorrichtung und ein Verfahren anzugeben, welche eine strukturierte und einfache Erfassung wesentlicher Änderungen einer Maschinenanordnung ermöglichen.

Gemäß einem Aspekt der vorliegenden Erfindung wird diese Aufgabe gelöst durch eine Vorrichtung zur Identifizierung von Veränderungen an einer Maschinenanordnung, umfassend: eine Erfassungseinheit, die eingerichtet ist, mindestens einen Zustand der Maschinenanordnung zu erfassen, eine Auswerteeinheit, die eingerichtet ist, den mindestens einen erfassten Zustand mit einem entsprechenden für die Maschinenanordnung erwarteten Zustand zu vergleichen und ein Unterscheidungsmerkmal zu identifizieren, wenn sich der erfasste Zustand von dem erwarteten Zustand unterscheidet, eine Beurteilungseinheit, die eingerichtet ist, anhand des identifizierten Unterscheidungsmerkmals einen Grad einer Veränderung zu bestimmen, sowie eine Schnittstelleneinheit, die eingerichtet ist, den bestimmten Grad der Veränderung in einem definierten Format bereitzustellen, wobei die Vorrichtung ferner eingerichtet ist, anhand des bestimmten Grads der Veränderung eine Risikobeurteilung selektiv zu triggern und deren Umfang zu beeinflussen.

Gemäß einem weiteren Aspekt wird diese Aufgabe gelöst durch ein Verfahren zur Identifizierung von Veränderungen an einer Maschinenanordnung, umfassend: Sensorgestütztes Erfassen mindestens eines Zustands der Maschinenanordnung; Vergleichen des mindestens einen erfassten Zustands mit einem entsprechenden für die Maschinenanordnung erwarteten Zustand; Identifizieren eines Unterscheidungsmerkmals, wenn sich der erfasste Zustand von dem erwarteten Zustand unterscheidet; Bestimmen eines Grads der Veränderung anhand des identifizierten Unterscheidungsmerkmals; Bereitstellen des bestimmten Grads der Veränderungen in einem definierten Format; und selektives Triggern einer Risikobeurteilung und Beeinflussen eines Umfangs der Risikobeurteilung anhand des bestimmten Grads der Veränderung.

Es ist somit eine Idee der vorliegenden Erfindung, Veränderungen an einer Maschinenanordnung oder im Umfeld der Maschinenanordnung automatisch zu erfassen. Hierfür ermittelt die Vorrichtung einen gegenwärtigen Zustand der Maschinenanordnung und vergleicht diese mit einem erwarteten Zustand. Wenn sich der erfasste Zustand und der erwartete Zustand voneinander unterscheiden, identifiziert die Vorrichtung entsprechende Unterscheidungsmerkmale.

Anhand der Unterscheidungsmerkmale beurteilt die Vorrichtung weiter einen Grad der Veränderung und gibt diesen erfassten Grad der Veränderung aus. Mit anderen Worten ist die Vorrichtung eingerichtet, Änderungen der Maschinenanordnung sowohl zu erkennen als auch einzuordnen. Basierend auf der Erkennung und der Einordnung wird dann selektiv eine automatisierte Risikobeurteilung gestartet bzw. deren Umfang definiert. Die Erfassung und Identifizierung von wesentlichen Änderungen an einer Maschinenanordnung kann somit strukturiert, systematisch und automatisiert erfolgen.

Die strukturierte und systematische Erfassung von Änderungen an einer Maschinenanordnung trägt vorteilhaft zu einer Verbesserung einer automatisierten Risikobeurteilung bei, da diese einerseits zielgerichteter eingesetzt werden kann und andererseits im Umfang erweitert wird, da weitere Aspekte berücksichtigt werden können. Zudem wird die Erfassung von Änderungen vorteilhaft von der sich daran anschließenden Risikobeurteilung getrennt. Die Verfahren können so unabhängig voneinander entwickelt und erweitert werden. Die eingangs genannte Aufgabe ist damit vollständig gelöst.

In einer Ausgestaltung kann die Erfassungseinheit mit mindestens einem Sensor gekoppelt sein, der dazu eingerichtet ist, den mindestens einen Zustand der Maschinenanordnung zu erfassen.

Die Erfassung eines Zustands der Maschinenanordnung kann folglich sensorgestützt erfolgen. Der Sensor kann insbesondere losgelöst von der Maschinenanordnung ausgebildet sein und vorteilhaft mehrere Maschinenanordnungen gleichzeitig erfassen. Der Sensor kann eingerichtet sein, maschinenabhängige und maschinenunabhängige Merkmale zu bestimmen, die zu einer Zustandsbeschreibung der Maschinenanordnung beitragen. Ebenso ist es denkbar, dass ein Sensor eine Kombination maschinenabhängiger und maschinenunabhängiger Merkmale erfasst, um den Zustand zu bestimmen. Zudem ist es möglich, wenn der Sensor zwei oder mehrere Maschinen betrachtet, dass für die Bestimmung des Zustands ein Zusammenwirken der Maschinen untereinander berücksichtigt wird. Der Sensor kann somit Faktoren erfassen, die über ein Modell der Maschinenanordnung oder ein durch Laufzeitdaten erweitertes Modell der Maschinenanordnung hinausgehen, und damit eine umfassendere Beurteilung eines Zustands der Maschinenanordnung ermöglichen.

In einer weiteren Ausgestaltung kann der Sensor mindestens einen optischen Sensor, insbesondere ein Kamerasystem, umfassen.

Optische Sensoren eignen sich besonders gut, mehrere unabhängige Parameter zu erfassen, indem die erfassten Abbilder mittels geeigneter Bildverarbeitung ausgewertet werden. Optische Sensoren sind daher besonders gut geeignet, gleichzeitig maschinenabhängige und maschinenunabhängige Faktoren zu bestimmen. Ferner kann durch Anpassen der nachgelagerten Bildverarbeitung der Erfassungsumfang angepasst werden, ohne den Sensor hardwareseitig zu verändern. Anpassungen können somit vorteilhaft ausschließlich in Software realisiert werden.

In einer weiteren Ausgestaltung kann der Sensor eingerichtet sein, eine geometrische Dimension der Maschinenanordnung oder Teilen hiervon zu erfassen.

Anhand der gemessenen geometrischen Dimensionen können Veränderungen der Maschinenanordnung erfasst werden, die nicht unmittelbar eine Änderung der Funktion der Maschine betreffen. Lage- und Positionsinformationen sind dennoch wichtige Faktoren bei der Bestimmung von wesentlichen Veränderungen im Gesamtkontext der Fertigungsanlage. Die Ausgestaltung trägt somit dazu bei, das Erfassungsvermögen von wesentlichen Änderungen weiter zu steigern.

In einer weiteren Ausgestaltung kann der Sensor eingerichtet sein, die Aktivitäten am oder im Umfeld der Maschinenanordnung als den mindestens einen Zustand der Maschinenanordnung zu erfassen.

Aktivitäten am oder im Umfeld können sich auf Menschen oder andere Objekte beziehen. Aktivitäten können u.a. ein besonderes Aufkommen von Menschen und Objekten im Bereich der Maschinenanordnung sein. Ebenso kann das Auftreten bestimmter Personen oder Objekte als Aktivität gesehen werden. Die Aktivitäten können unmittelbar eine Veränderung der Maschine oder deren Nutzung darstellen oder Änderungsindizien hierfür sein. Auf diese Weise können besonders maschinenunabhängige Parameter erfasst und zur Beurteilung einer wesentlichen Änderung herangezogen werden.

In einer weiteren Ausgestaltung kann die Beurteilungseinheit eingerichtet sein, eine Konformitätsbewertung in Bezug auf eine für den erwarteten Zustand hinterlegte Konformitätsbeschreibung durchzuführen und den Grad der Veränderung anhand der Konformitätsbewertung zu bestimmen.

In dieser Ausgestaltung kann für die Maschinenanordnung eine Konformitätsbewertung bereits zu einem früheren Zeitpunkt durchgeführt worden sein und ein Ergebnis in einer Konformitätsbeschreibung hinterlegt worden sein. In diesem Fall kann die Beurteilungseinheit selbst eine Konformitätsbewertung ausführen, oder ausführen lassen, und den Grad der Änderung in Bezug auf die zuvor ermittelte Konformitätsbewertung bestimmen. Der Grad der Veränderung kann somit unmittelbar von einer zuvor bestimmten Konformitätsbewertung abhängig sein. Die hinterlegte Konformitätsbeschreibung kann beispielsweise ein Rahmen oder ein Toleranzbereich für die Bestimmung der Änderung festlegen und damit den notwendigen Aufwand für die Bestimmung des Grads der Veränderung reduzieren. Denkbar ist auch, dass anhand der Konformitätsbeschreibung der Aufwand für die Bestimmung des Grads der Veränderung zunächst festgeschrieben wird, um den Umfang der Suche nach Veränderung zu determinieren.

In einer weiteren Ausgestaltung kann das Unterscheidungsmerkmal einer Leistungssteigerung der Maschinenanordnung, einer Funktionsänderung der Maschinenanordnung und/oder einer Änderung der bestimmungsgemäßen Verwendung entsprechen.

Der Vergleich des gegenwärtigen Zustands der Maschinenanordnung mit einem erwarteten Zustand kann somit direkt zu einer Einordnung in die besagten Kategorien führen. Der erfasste Zustand und der hinterlegte Zustand umfassen somit jeweils Parameter, die eine derartige Zuordnung erlauben. Auf diese Weise können ein Großteil von möglichen, wesentlichen Änderungen einer Maschinenanordnung erfasst werden.

In einer weiteren Ausgestaltung kann das Unterscheidungsmerkmal einer Lage- oder Positionsänderung der Maschinenanordnung oder Teilen der Maschinenanordnung entsprechen.

Lage- und/oder Positionsveränderungen bilden eine weitere Gruppe von Änderungen, die einer wesentlichen Änderung der Maschinenanordnung entsprechen können. Die Erfassung entsprechender Parameter trägt somit vorteilhaft zur Identifizierung wesentlicher Änderungen bei.

In einer weiteren Ausgestaltung kann das Unterscheidungsmerkmal dem Hinzufügen, Wechseln oder einer Neuinstallation mindestens einer weiteren Komponente der Maschinenanordnung oder weiteren Komponenten im Umfeld der Maschinenanordnung entsprechen.

Gemäß dieser Ausgestaltung kann die Auswerteeinheit aus den erfassten Zustandsinformationen auf das Hinzufügen, Wechseln oder erneute Installieren von Komponenten an der Maschinenanordnung schließen. Beispielsweise kann ein Werkzeugwechsel erfasst werden, der zwar nicht die Betriebsparameter der Maschine verändert, gleichwohl aber normativ eine wesentliche Veränderung darstellt. So können insbesondere Änderungen, die durch die Verwendung der Maschine entstehen, erfasst werden.

In einer weiteren Ausgestaltung kann die Erfassungseinheit eingerichtet sein, den mindestens einen Zustand der Maschinenanordnung aus einem für die Maschinenanordnung hinterlegten digitalen Verwaltungsobjekt zu bestimmen oder die Bestimmung zu ergänzen.

Ein digitales Verwaltungsobjekt kann eine geometrische, funktionale und sicherheitstechnische Beschreibung sein, die der Maschinenanordnung zugeordnet ist. Das Verwaltungsobjekt kann auch eine digitale Repräsentation der Maschinenanordnung selbst sein. Änderungen an der realen Maschine werden in dem Verwaltungsobjekt registriert oder können durch Änderungen an dem Verwaltungsobjekt bewirkt werden. Bei Maschinen, die über ein solches Verwaltungsobjekt verfügen, kann der Zustand der Maschine besonders leicht erfasst oder ein erfasster Zustand um zusätzliche Informationen ergänzt werden.

In einer weiteren Ausgestaltung kann das digitale Verwaltungsobjekt in einer Steuerung der Maschinenanordnung oder in einer zentralen Ablage hinterlegt sein. Denkbar ist, dass das Verwaltungsobjekt direkt von der Maschine verwahrt wird, beispielsweise in einem Speicher einer zugehörigen Steuerung der Maschine. Das Verwaltungsobjekt kann jedoch auch in einer zentralen Ablage, beispielsweise einer Firmendatenbank, hinterlegt sein. Über entsprechende Schnittstellen kann die Vorrichtung auf diese Daten automatisch zugreifen, wodurch die Erfassung des Zustands der Maschinenanordnung weiter vereinfacht wird.

In einer weiteren Ausgestaltung kann das digitale Verwaltungsobjekt eine Konfiguration der Maschinenanordnung beinhalten und das Unterscheidungsmerkmal einer Konfigurationsänderung entsprechen.

Hier entspricht das Verwaltungsobjekt somit unmittelbar einer Konfiguration der Maschinenanordnung. Die Konfiguration kann den gegenwärtigen Zustand der Maschinenanordnung beschreiben und auf einfache Weise mit einer vorherigen Konfiguration verglichen werden. Eine automatische Erfassung des Zustands oder Aspekten hiervon kann damit weiter vereinfacht werden.

In einer weiteren Ausgestaltung kann die Beurteilungseinheit ein Expertensystem umfassen oder mit einem solchen verknüpft sein, welches dazu eingerichtet ist, den Grad der Veränderung als eine wesentliche Änderung der Maschinenanordnung zu beurteilen.

Das Expertensystem kann ein System zur automatisierten Klassifizierung sein. Es kann sich um ein regelbasiertes System oder um ein selbstlernendes System oder um eine Mischform hiervon handeln. Das Expertensystem kann anhand der erfassten Unterscheidungsmerkmale und ggf. weiterer Parameter, beispielsweise Parameter der Umgebung, den Grad der Veränderung bestimmen oder zu dessen Bestimmung beitragen. Eine wesentliche Änderung kann in diesem Fall nicht nur ein technisches Merkmal sein, sondern insbesondere eine normative Vorgabe. Die Bestimmung des Grads der Veränderung kann somit strukturiert, systematisch und automatisiert erfolgen.

In einer weiteren Ausgestaltung kann die Schnittstelleneinheit mit einem System zur assistierten oder automatischen Risikobeurteilung verknüpft sein, wobei die Risikobeurteilung in Abhängigkeit des Grads der Veränderung erfolgt.

Der ermittelte Grad der Veränderung kann somit unmittelbar eine automatisierte Risikobeurteilung beeinflussen. So kann der Grad der Veränderung einerseits die Risikobeurteilung triggern, also veranlassen, dass eine solche durchgeführt wird, und andererseits kann der ermittelte Grad der Veränderung auch den Umfang einer automatisierten Risikobeurteilung vorgeben. Beides kann dazu beitragen, eine automatisierte Risikobeurteilung effizienter zu gestalten. Gleichzeitig kann die automatisierte Risikobeurteilung durch den externen Trigger auch zuverlässiger werden, da eine Risikobeurteilung durch zusätzliche Aspekte getriggert werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte schematische Darstellung eines Ausführungsbeispiels der Vorrichtung, und
- Fig. 2: eine schematische Darstellung eines Ausführungsbeispiels des Verfahrens.

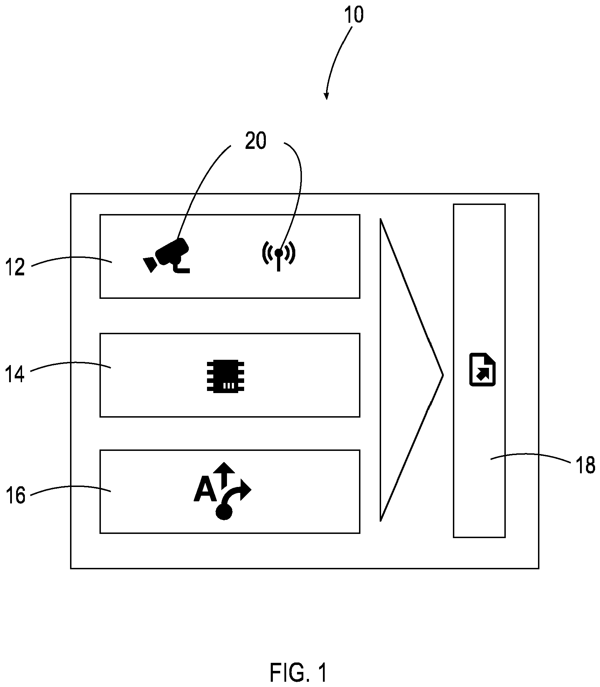

Fig. 1 zeigt in einer vereinfachten, schematischen Darstellung ein Ausführungsbeispiel der Vorrichtung. Die Vorrichtung ist hier in ihrer Gesamtheit mit der Bezugsziffer 10 bezeichnet.

Die Vorrichtung umfasst eine Erfassungseinheit 12, eine Auswerteeinheit 14 sowie eine Beurteilungseinheit 16. Eine Schnittstelleneinheit 18 verbindet die Vorrichtung nach außen.

Die Erfassungseinheit 12 erfasst den Zustand einer Maschinenanordnung (hier nicht dargestellt). Die Maschinenanordnung kann eine technische Anlage oder eine Einrichtung in einer Fertigungsanlage sein, beispielsweise eine Werkzeugmaschine. Die Vorrichtung ist jedoch nicht auf eine bestimmte Art von Maschinenanordnung beschränkt.

Der Zustand der Maschinenanordnung beschreibt eine gegenwärtige Eigenschaft der Maschinenanordnung oder deren Umgebung. Der Zustand kann eine physische oder virtuelle Eigenschaft der Maschinenanordnung sein und beispielsweise einem Betriebsparameter entsprechen. Der Zustand kann jedoch auch maschinenunabhängig sein und einer Eigenschaft der Umgebung oder weiterer Objekte, die in einer Wirkbeziehung zur Maschinenanordnung stehen, entsprechen. Der Zustand kann eine Vielzahl von Parametern verschiedener Art umfassen, die zusammen den durch die Erfassungseinheit erfassten Zustand repräsentieren.

Die Erfassung des Zustands kann in mannigfaltiger Weise erfolgen. Beispielsweise kann die Erfassungseinheit 12 mit einem oder mehreren Sensoren 20 verknüpft sein, die jeweils einen oder mehrere Parameter zum gegenwärtigen Zustand der Maschinenanordnung beitragen. Solche Sensoren 20 können beispielsweise optische Sensoren sein, die die Maschinenanordnung kontinuierlich abbilden. Die optischen Sensoren können auch 3D-Sensoren sein, die zusätzlich zu einem zweidimensionalen Bild dreidimensionale Informationen bereitstellen. Ebenso kann ein Kamerasystem mit einem oder mehreren bildgebenden Sensoren als Sensor der Erfassungseinheit 12 eingerichtet sein. In diesem Fall kann die Erfassungseinheit 12 den Zustand der Maschinenanordnung mittels geeigneter Bildverarbeitung aus dem von den Sensoren bereitgestellten Bildmaterial extrahieren.

Die Erfassungseinheit 12 kann auch eine informationstechnische Einrichtung sein, oder auf eine solche zugreifen, und über entsprechende Schnittstellen Information über den Zustand der Maschinenanordnung erfassen. Beispielsweise kann die Erfassungseinheit 12 über Schnittstellen zu der Maschinenanordnung Einstell- und Betriebsparameter von dieser aufnehmen und als Zustandsparameter verarbeiten. Die Erfassungseinheit 12 kann auch in ein Netzwerk integriert sein, um aus einer Vielzahl von Quellen Parameter über den Zustand der Maschinenanordnung zu erlangen. Das Netzwerk kann ein industrieller Feldbus sein, der innerhalb einer Fertigungsanlage die einzelnen Einheiten verknüpft, oder ein Firmennetzwerk, innerhalb dessen die Fertigung verwaltet wird.

Als informationstechnische Einrichtung kann die Erfassungseinrichtung 12 eingerichtet sein, digitale Verwaltungsobjekte zu erfassen. Die Verwaltungsobjekte können geometrische, funktionale und sicherheitstechnische Beschreibungen der Maschinenanordnung beinhalten, aus denen sich ein gegenwärtiger Zustand der Maschinenanordnung ableiten lässt. Die digitalen Verwaltungsobjekte können auch eine digitale Repräsentation in Form eines virtuellen Modells der Maschinenanordnung umfassen.

In verschiedenen Ausführungsformen kann die Erfassungseinheit 12 als ein Integrator eingerichtet sein, welcher Parameter aus unterschiedlichen Quellen und von unterschiedlicher Art aggregiert und zu einem Zustand der Maschinenanordnung zusammenführt. Beispielsweise kann die Erfassungseinheit 12 den gegenwärtigen Zustand aus Sensordaten, Laufzeitdaten und digitalen Verwaltungsdaten zusammensetzen, um einen möglichst präzisen Zustand der Maschinenanordnung zu erfassen.

Nach der Erfassung des gegenwärtigen Zustands in der oben beschriebenen Weise durch die Erfassungseinheit 12, wird dieser an die Auswerteeinheit 14 übertragen. Die Auswerteeinheit 14 ist im Wesentlichen ein Vergleicher. Sie gleicht den erfassten Zustand der Maschinenanordnung mit einem entsprechenden für die Maschinenanordnung erwarteten Zustand ab. Der erwartete Zustand kann ein Zustand der Maschine zu einem vorherigen Zeitpunkt sein und als Datensatz beispielsweise in einem Speicher der Auswerteeinheit 14 hinterlegt sein. Der erwartete Zustand kann auch ein generierter Zustand sein, der erst für den Vergleich zur Laufzeit erzeugt wird. Es können auch nur Teile des Zustands als Zustandsparameter hinterlegt sein, während andere Teile dynamisch generiert werden. Beispielsweise können bestimmte Zustandsparameter des erwarteten Zustands aus einem Regelsatz generiert und dynamisch ermittelt werden.

Der erwartete Zustand kann dementsprechend auch aus einer Konformitätsbeschreibung dynamisch abgeleitet werden, indem die Konformitätsbeschreibung Geltungsbereiche definiert, aus denen sich Toleranzbereiche für die Zustandsparameter des erwarteten Zustands errechnen lassen. In diesem Fall kann es ausreichend sein, dass nur die Konformitätsbeschreibung in einem Speicher hinterlegt ist.

Aus dem Vergleich des erfassten Zustands mit dem erwarteten Zustand leitet die Auswerteeinheit 14 Unterscheidungsmerkmale ab. Die Unterscheidungsmerkmale können sich unmittelbar aus der Differenz ergeben oder sich hieraus ableiten. Die Unterscheidungsmerkmale können beispielsweise einer Leistungssteigerung der Maschinenanordnung, einer Funktionsänderung der Maschinenanordnung und/oder einer Änderung der bestimmungsgemäßen Verwendung entsprechen. Die Unterscheidungsmerkmale können ferner einer Lage- oder Positionsänderung der Maschinenanordnung oder Teilen hiervon entsprechen. Ebenso können die Unterscheidungsmerkmale das Hinzufügen, Wechseln oder Neuinstallieren von Komponenten an der Maschine oder in dem Umfeld anzeigen. Denkbar ist auch, dass das Unterscheidungsmerkmal einer Konfigurationsänderung der Maschinenanordnung entspricht.

Die Unterscheidungsmerkmale können auf der Differenz der zu vergleichenden Zustände beruhen und durch ein Regelwerk weiter ergänzt werden. Beispielsweise muss nicht jede Differenz als Unterscheidungsmerkmal erfasst werden, wenn beispielsweise die Differenz in einem definierten Toleranzbereich liegt. Ebenso ist es denkbar, dass die Menge der Zustandsparameter, die den erfassten Zustand repräsentieren, größer oder kleiner als die Menge der Zustandsparameter ist, die den erwarteten Zustand wiedergeben. In solch einem Fall kann ein Regelwerk vorgeben, ob und in welcher Form ein Unterscheidungsmerkmal vorliegt.

Anhand der Unterscheidungsmerkmale bestimmt eine Beurteilungseinheit 16 einen Grad der Veränderung der Maschinenanordnung. Der Grad der Veränderung kann in einem einfachen Fall binär sein und zwei Zustände darstellen. Die zwei Zustände können beispielsweise angeben, ob eine wesentliche Änderung an der Maschinenanordnung vorliegt bzw. angenommen werden muss, oder ob keine solche Änderung vorliegt. Denkbar ist auch, dass der Grad der Veränderung in verschiedenen Stufen wiedergegeben wird. Beispielsweise kann die Beurteilungseinheit 16 in verschieden Ausführungsformen anhand der Unterscheidungsmerkmale auch eine über zwei Zustände hinausgehende Klassifizierung der Änderungen vornehmen.

Die Beurteilung der Unterscheidungsmerkmale kann gemäß vordefinierten Kriterien erfolgen. Ebenso kann die Beurteilung anhand von dynamischen Kriterien erfolgen. In verschiedenen Ausführungsformen kann die Beurteilung durch ein Expertensystem erfolgen, welches die Beurteilungseinheit implementiert oder mit welchem die Beurteilungseinheit verbunden ist. Das Expertensystem kann ein System sein, das aus normativen Vorgaben Kriterien für die Beurteilung generiert. Beispielsweise kann das Expertensystem eine künstliche Intelligenz (KI) sein, welches aus normativen Vorgaben Parameter zur Beurteilung von wesentlichen Änderungen bestimmt. Die Beurteilungseinheit 16 kann zudem eingerichtet sein, automatisch Feedback für eine solche selbstlernende KI breitzustellen.

Das Ergebnis der Beurteilung, also der Grad der Veränderung, kann über eine Schnittstelleneinheit 18 ausgegeben und geteilt werden. Die Schnittstelleneinheit 18 kann eine Datenschnittstelle sein. Alternativ oder ergänzend kann die Schnittstelleneinheit 18 auch eine Anzeige umfassen, um den Grad der Veränderung direkt ausgeben zu können.

Der ermittelte Grad der Veränderung kann die Grundlage einer Risikobeurteilung bilden und zur Kenntnisnahme beispielsweise auf einem Dashboard angezeigt werden. Denkbar ist auch, dass der bereitgestellte Grad der Veränderung unmittelbar durch ein anderes System verwendet wird. Beispielsweise kann durch den bereitgestellten Grad der Veränderung eine automatisierte Risikobeurteilung getriggert oder beeinflusst werden. Ebenso ist es denkbar, dass über die Schnittstelle eine Steuerung der Maschine oder eine Sicherheitssteuerung der Maschine angesprochen wird, die bei Auftreten eines definierten Änderungsgrads die Maschinenanordnung stillsetzt oder ein Anlaufen verhindert.

Die Vorrichtung 10 kann als eigenständige Einheit ausgebildet sein. Ebenso können die Einheiten der Vorrichtung eigenständige Einheiten sein. Die Einheiten können jedoch auch funktionale Einheiten sein, die auf einer gemeinsamen oder verteilten Plattform ausgeführt werden. Grundsätzlich ist auch denkbar, dass die Vorrichtung modular aufgebaut ist und sich die einzelnen Komponenten über mehrere Einheiten erstrecken. Beispielsweise können einige Einheiten auch durch Cloud-Dienste abgebildet werden. Die Vorrichtung ist nicht auf eine bestimmte hard- oder softwaretechnische Ausgestaltung beschränkt.

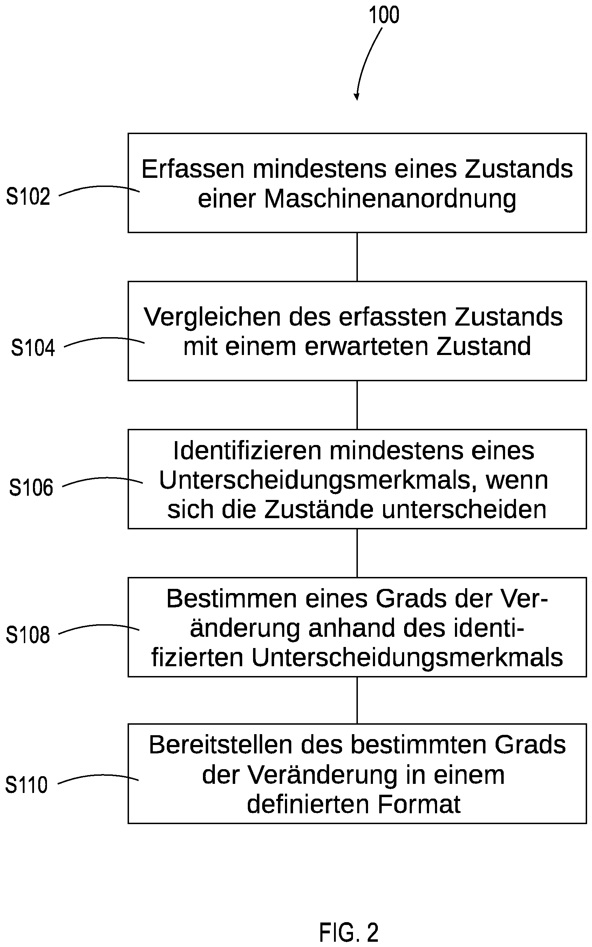

Fig. 2 zeigt abschließend in einer schematischen Darstellung ein Ausführungsbeispiel eines Verfahrens zur Identifizierung von Veränderungen an einer Maschinenanordnung. Das Verfahren ist hier mit der Bezugsziffer 100 bezeichnet und umfasst mindestens die folgenden fünf Schritte:

In einem ersten Schritt S102 wird mindestens ein Zustand der Maschinenanordnung erfasst. Anschließend wird der mindestens eine erfasste Zustand mit einem entsprechenden für die Maschinenanordnung erwarteten Zustand verglichen (S104). Wenn sich der erfasste Zustand von dem erwarteten Zustand unterscheidet, wird als Nächstes ein Unterscheidungsmerkmal identifiziert (S106). Aus dem Unterscheidungsmerkmal wird anschließend der Grad einer Veränderung bestimmt (S108). Der bestimmte Grad der Veränderung wird zuletzt in einem definierten Format bereitgestellt und/oder ausgegeben (S110).

Es versteht sich, dass in bevorzugten Ausführungsbeispielen das Verfahren weitere Schritte umfassen kann, welche die verschiedenen Ausführungsformen der Vorrichtung berücksichtigen. Grundsätzlich ist der Schutzbereich der vorliegenden Erfindung durch die nachfolgenden Ansprüche bestimmt und durch die in der Beschreibung erläuterten oder in den Figuren gezeigten Merkmale nicht beschränkt.

## Patentansprüche

1. Vorrichtung (10) zur Identifizierung von Änderungen an einer Maschinenanordnung, umfassend:
eine Erfassungseinheit (12), die eingerichtet ist, zumindest einen Zustand der Maschinenanordnung zu erfassen,
eine Auswerteeinheit (14), die eingerichtet ist, den mindestens einen erfassten Zustand mit einem entsprechenden für die Maschinenanordnung erwarteten Zustand zu vergleichen und ein Unterscheidungsmerkmal zu identifizieren, wenn sich der erfasste Zustand von dem erwarteten Zustand unterscheidet,
eine Beurteilungseinheit (16), die eingerichtet ist, anhand des identifizierten Unterscheidungsmerkmals einen Grad einer Veränderung zu bestimmen, sowie eine Schnittstelleneinheit (18), die eingerichtet ist, den bestimmten Grad der Veränderung in einem definierten Format bereitzustellen,
wobei die Vorrichtung ferner eingerichtet ist, anhand des bestimmten Grads der Veränderung eine Risikobeurteilung selektiv zu triggern und deren Umfang zu beeinflussen.

2. Vorrichtung nach Anspruch 1, wobei die Erfassungseinheit (12) mit mindestens einem Sensor (20) gekoppelt ist, der dazu eingerichtet ist, den mindestens einen Zustand der Maschinenanordnung zu erfassen.

3. Vorrichtung nach Anspruch 2, wobei der Sensor (20) mindestens einen optischen Sensor, insbesondere ein Kamerasystem, umfasst.

4. Vorrichtung nach einem der Ansprüche 2 oder 3, wobei der Sensor (20) eingerichtet ist, eine geometrische Dimension der Maschinenanordnung oder Teilen hiervon zu erfassen.

5. Vorrichtung nach einem der Ansprüche 2 bis 4, wobei der Sensor (20) eingerichtet ist, Aktivitäten am oder im Umfeld der Maschinenanordnung als den mindestens einen Zustand der Maschinenanordnung zu erfassen.

6. Vorrichtung nach einem der vorherigen Ansprüche, wobei die Beurteilungseinheit (16) eingerichtet ist, eine Konformitätsbewertung in Bezug auf eine für den erwarteten Zustand hinterlegte Konformitätsbeschreibung durchzuführen, um den Grad der Veränderung anhand der Konformitätsbewertung zu bestimmen.

7. Vorrichtung nach einem der vorherigen Ansprüche, wobei das Unterscheidungsmerkmal einer Leistungssteigerung der Maschinenanordnung, einer Funktionsänderung der Maschinenanordnung und/oder einer Änderung der bestimmungsgemäßen Verwendung entspricht.

8. Vorrichtung nach einem der vorherigen Ansprüche, wobei das Unterscheidungsmerkmal einer Lage- oder Positionsänderung der Maschinenanordnung oder Teilen der Maschinenanordnung entspricht.

9. Vorrichtung nach einem der vorherigen Ansprüche, wobei das Unterscheidungsmerkmal dem Hinzufügen, Wechseln oder einer Neuinstallation mindestens einer weiteren Komponente der Maschinenanordnung oder mindestens einer weiteren Komponente im Umfeld der Maschinenanordnung entspricht.

10. Vorrichtung nach einem der vorherigen Ansprüche, wobei die Erfassungseinheit (12) eingerichtet ist, den mindestens einen Zustand der Maschinenanordnung aus einem für die Maschinenanordnung hinterlegten digitalen Verwaltungsobjekt zu bestimmen.

11. Vorrichtung nach Anspruch 10, wobei das digitale Verwaltungsobjekt in einer Steuerung der Maschinenanordnung oder in einer zentralen Ablage hinterlegt ist.

12. Vorrichtung nach einem der Ansprüche 10 oder 11, wobei das digitale Verwaltungsobjekt eine Konfiguration der Maschinenanordnung beinhaltet und das Unterscheidungsmerkmal einer Konfigurationsänderung entspricht.

13. Vorrichtung nach einem der vorherigen Ansprüche, wobei die Beurteilungseinheit (16) ein Expertensystem umfasst oder mit einem solchen verknüpft ist, welches dazu eingerichtet ist, den Grad der Veränderung als eine wesentliche Veränderung der Maschinenanordnung zu beurteilen.

14. Vorrichtung nach einem der vorherigen Ansprüche, wobei die Schnittstelleneinheit (18) mit einem System zur assistierten oder automatischen Risikobeurteilung verknüpft ist, wobei die Risikobeurteilung in Abhängigkeit des Grads der Veränderung erfolgt.

15. Verfahren zur Identifizierung von Veränderung an einer Maschinenanordnung, umfassend:
Sensorgestütztes Erfassen mindestens eines Zustands der Maschinenanordnung;
Vergleichen des mindestens einen erfassten Zustands mit einem entsprechenden für die Maschinenanordnung erwarteten Zustand;
Identifizieren eines Unterscheidungsmerkmals, wenn sich der erfasste Zustand von dem erwarteten Zustand unterscheidet;
Bestimmen eines Grads der Veränderung anhand des identifizierten Unterscheidungsmerkmals;
Bereitstellen des bestimmten Grads der Veränderung in einem definierten Format; und
selektives Triggern einer Risikobeurteilung und Beeinflussen eines Umfangs der Risikobeurteilung anhand des bestimmten Grads der Veränderung.

## Claims

1. A device (10) for identifying changes to a machine assembly, comprising:
a detection unit (12) configured to detect at least one state of the machine assembly,
an evaluation unit (14) configured to compare the at least one detected state with a corresponding expected state for the machine assembly and to identify a distinguishing feature if the detected state differs from the expected state,
an assessment unit (16) configured to determine a degree of change on the basis of the identified distinguishing feature, and
an interface unit (18) configured to provide the specific degree of change in a defined format,
wherein the device is further configured to selectively trigger a risk assessment based on the determined degree of change and to influence the extent thereof.

2. The device according to claim 1, wherein the detection unit (12) is coupled to at least one sensor (20) which is set up to detect the at least one state of the machine assembly.

3. The device according to claim 2, wherein the sensor (20) comprises at least one optical sensor, in particular a camera system.

4. The device according to any one of claims 2 or 3, wherein the sensor (20) is configured to detect a geometrical dimension of the machine assembly or parts thereof.

5. The device according to any one of claims 2 to 4, wherein the sensor (20) is configured to detect activities on or around the machine assembly as the at least one state of the machine assembly.

6. The device according to any one of the preceding claims, wherein the assessment unit (16) is configured to perform a conformity assessment with respect to a conformity description stored for the expected state in order to determine the degree of change based on the conformity assessment.

7. The device according to any one of the preceding claims, wherein the distinguishing feature corresponds to an increase in performance of the machine assembly, a change in function of the machine assembly and/or a change in intended use.

8. The device according to any one of the preceding claims, wherein the distinguishing feature corresponds to a change in position or attitude of the machine assembly or parts of the machine assembly.

9. The device according to any one of the preceding claims, wherein the distinguishing feature corresponds to adding, changing or reinstalling at least one further component of the machine assembly or at least one further component in the environment of the machine assembly.

10. The device according to one of the preceding claims, wherein the detection unit (12) is set up to determine the at least one state of the machine assembly from a digital management object stored for the machine assembly.

11. The device according to claim 10, wherein the digital management object is stored in a controller of the machine assembly or in a central repository.

12. The device according to any one of claims 10 or 11, wherein the digital management object comprises a configuration of the machine assembly and the distinguishing feature corresponds to a configuration change.

13. The device according to any one of the preceding claims, wherein the assessment unit (16) comprises or is associated with an expert system that is configured to assess the degree of change as a substantial change in the machine arrangement.

14. The device according to any one of the preceding claims, wherein the interface unit (18) is linked to a system for assisted or automatic risk assessment, wherein the risk assessment is performed as a function of the degree of change.

15. A method of identifying modification to a machine assembly, comprising:
Detecting at least one state of the machine assembly by a sensor;
Comparing the at least one detected state with a corresponding expected state of the machine arrangement;
Identifying a distinguishing feature when the detected state differs from the expected state;
Determininf a degree of change based on the identified distinguishing feature;
Providing the specified degree of change in a defined format; and
Triggering of a risk assessment selectively and influencing the scope of the risk assessment based on the specific degree of change.

## Revendications

1. Dispositif (10) permettant l'identification de modifications au niveau d'un agencement de machines, comprenant :
une unité de détection (12) qui est configurée pour détecter au moins un état de l'agencement de machines,
une unité d'évaluation (14) qui est configurée pour comparer l'au moins un état détecté à un état attendu correspondant pour l'agencement de machines et pour identifier une caractéristique distinctive lorsque l'état détecté se distingue de l'état attendu,
une unité d'appréciation (16) qui est configurée pour déterminer un degré d'un changement à l'aide de la caractéristique distinctive identifiée, ainsi qu'une unité formant interface (18) qui est configurée pour fournir le degré du changement déterminé dans un format défini,
dans lequel le dispositif est en outre configuré pour déclencher sélectivement une appréciation de risques à l'aide du degré du changement déterminé et pour agir sur son périmètre.

2. Dispositif selon la revendication 1, dans lequel l'unité de détection (12) est couplée à au moins un capteur (20) qui est configuré pour détecter l'au moins un état de l'agencement de machines.

3. Dispositif selon la revendication 2, dans lequel le capteur (20) comprend au moins un capteur optique, en particulier un système à caméra.

4. Dispositif selon l'une des revendications 2 ou 3, dans lequel le capteur (20) est configuré pour détecter une dimension géométrique de l'agencement de machines ou de parties de celui-ci.

5. Dispositif selon l'une des revendications 2 à 4, dans lequel le capteur (20) est configuré pour détecter des activités au niveau de l'agencement de machines ou dans les environs de celui-ci en tant qu'au moins un état de l'agencement de machines.

6. Dispositif selon l'une des revendications précédentes, dans lequel l'unité d'appréciation (16) est configurée pour effectuer une estimation de conformité par rapport à une description de conformité consignée pour l'état attendu, afin de déterminer le degré du changement à l'aide de l'estimation de conformité.

7. Dispositif selon l'une des revendications précédentes, dans lequel la caractéristique distinctive correspond à une augmentation de performances de l'agencement de machines, à une modification de fonctionnement de l'agencement de machines et/ou à une modification de l'utilisation conforme.

8. Dispositif selon l'une des revendications précédentes, dans lequel la caractéristique distinctive correspond à une modification d'emplacement ou de position de l'agencement de machines ou de parties de l'agencement de machines.

9. Dispositif selon l'une des revendications précédentes, dans lequel la caractéristique distinctive correspond à l'ajout, à l'échange ou à la réinstallation d'au moins un autre composant de l'agencement de machines ou d'au moins un autre composant dans les environs de l'agencement de machines.

10. Dispositif selon l'une des revendications précédentes, dans lequel l'unité de détection (12) est configurée pour déterminer l'au moins un état de l'agencement de machines à partir d'un objet de gestion numérique consigné pour l'agencement de machines.

11. Dispositif selon la revendication 10, dans lequel l'objet de gestion numérique est consigné dans une commande de l'agencement de machines ou dans un dépôt central.

12. Dispositif selon l'une des revendications 10 ou 11, dans lequel l'objet de gestion numérique contient une configuration de l'agencement de machines et la caractéristique distinctive correspond à une modification de configuration.

13. Dispositif selon l'une des revendications précédentes, dans lequel l'unité d'appréciation (16) comprend un système expert ou est associée à un tel système expert, lequel est configuré pour apprécier le degré du changement en tant que changement sensible de l'agencement de machines.

14. Dispositif selon l'une des revendications précédentes, dans lequel l'unité formant interface (18) est associée à un système permettant l'appréciation de risques assistée ou automatique, dans lequel l'appréciation de risques est réalisée en fonction du degré du changement.

15. Procédé permettant l'identification d'un changement au niveau d'un agencement de machines, comprenant :
la détection à l'aide de capteurs d'au moins un état de l'agencement de machines ;
la comparaison de l'au moins un état détecté à un état attendu correspondant pour l'agencement de machines ;
l'identification d'une caractéristique distinctive lorsque l'état détecté se distingue de l'état attendu ;
la détermination d'un degré du changement à l'aide de la caractéristique distinctive identifiée ;
la fourniture du degré du changement déterminé dans un format défini ; et
le fait de déclencher sélectivement une appréciation de risques et d'agir sur un périmètre de l'appréciation de risques à l'aide du degré du changement déterminé.
